# EUROPEAN PATENT APPLICATION

(11) **EP 2 398 232 A2**
(43) Date of publication of application: **21.12.2011**
(21) Application number: 11168625.9
(22) Date of filing: 03.06.2011
(51) Int. Cl.: H04N 5/46

(54) **Television signal receiver**

(30) Priority: 15.06.2010 JP 2010136611
(71) Applicant: Funai Electric Co., Ltd., Daito-shi, Osaka 574-0013 (JP)
(72) Inventor: Takamura, Masaaki, Daito-shi, Osaka 574-0013 (JP)
(74) Representative: Grünecker, Kinkeldey, Stockmair & Schwanhäusser

(57) **Abstract**

A TV signal receiver comprises a first tuner, a second tuner, an output switching unit, a remote control, and a controller. When a user selects a TV channel using the remote control, the controller controls not only the first tuner so as to try to receive a TV signal of the channel selected by the remote control using DVB-T receiving system, but also the second tuner so as to try to receive a TV signal of the selected channel using DVB-T2 receiving system. And then the controller further controls the output switching unit so as to switch to the signal path leading to the external device from one of the first tuner and the second tuner which has been able to receive a TV signal of the selected channel normally.

## Description

### 1. Field of the Invention

The present invention relates to a television signal receiver for receiving television signals broadcast from television stations.

### 2. Description of the Related Art

In Europe including the United Kingdom, terrestrial digital television is broadcast not only in DVB-T (Digital Video Broadcast-Terrestrial) system but also in DVB-T2 (Digital Video Broadcast-Terrestrial 2) system which has higher transmitting efficiency than the DVB-T system. Therefore, television broadcasting of the DVB-T system and television broadcasting of the DVB-T2 system coexist in Europe.

The DVB-T system and the DVB-T2 system are different in a receiving system of television signals (a system for demodulating and decoding television signals into video signals and audio signals). Accordingly, regarding television broadcasting of the DVB-T system, a television signal receiver has to receive a television signal using DVB-T receiving system (a receiving system corresponding to television broadcasting of the DVB-T system). On the other hand, regarding television broadcasting of the DVB-T2 system, a television signal receiver has to receive a television signal using DVB-T2 receiving system (a receiving system corresponding to television broadcasting of the DVB-T2 system).

When a user selects the television channel with a remote control and so on, a conventional television signal receiver tunes in to the selected channel using the DVB-T receiving system and the DVB-T2 receiving system sequentially so as to make the monitor display videos based on television signals of the channel selected by the user. Specifically, when a user selects a television channel, the conventional television signal receiver performs tuning operation so as to try to receive a television signal of the selected channel using the DVB-T receiving system. As a result of the trial, if the conventional television signal receiver has been able to receive the television signal using the DVB-T receiving system (has been able to demodulate and decode television signals into video signals and audio signals normally), the conventional television signal receiver makes the monitor display videos based on television signals received using the DVB-T receiving system. On the other hand, as a result of the above-described trial, if the conventional television signal receiver has not been able to receive the television signal using the DVB-T receiving system, the conventional television signal receiver performs tuning operation so as to try to receive a television signal of the selected channel using the DVB-T2 receiving system, and then makes the monitor display videos based on television signals received using the DVB-T2 receiving system.

The above-described conventional television signal receiver is designed to tune in to the selected channel using the DVB-T receiving system and the DVB-T2 receiving system sequentially, when a user selects the television channel. Accordingly, the conventional television signal receiver takes a long time to tune in to the selected channel. Therefore, it takes a long time from when a user selects the television channel till the monitor displays videos based on television signals of the selected channel.

Meanwhile, Japanese Laid-open Patent Publication 2009-152740 discloses a television signal receiver for receiving terrestrial digital broadcast of the DVB-T system. The television signal receiver extracts physical channels, on which a user can watch television program, for the physical channels of the UHF band based on a predetermined search plan. And then, based on an original network ID included in NIT of TS of each of the extracted physical channels, the television signal receiver identifies a country where the receiver is used. Further, based on the search plan corresponding to the identified country, the television signal receiver extracts physical channels, on which a user can watch television program, for the physical channels of the VHF band.

Japanese Laid-open Patent Publication 2009-152775 discloses another television signal receiver for receiving terrestrial digital broadcast of the DVB-T system. The television signal receiver creates a country-by-country channel list for each country identification data acquired from the broadcast signals so as to be able to tune based on the country-by-country channel list of the country selected by a user.

Japanese Laid-open Patent Publication 2002-44558 discloses a television signal receiver which discriminates broadcast form of the broadcast signal based on broadcast form information superimposed on a selected broadcast signal so that performs channel tuning operation suitable for the broadcast form.

Japanese Laid-open Patent Publication 2009-112010 discloses an OFDM (Orthogonal Frequency Division Multiplexing) sending device and an OFDM receiving device which are applicable to television broadcasting of the DVB-T2 system.

However, these known receivers or devices do not solve the above-described problem of taking a long time to tune in to the selected channel.

### SUMMARY OF THE INVENTION

An object of the present invention is to provide a television signal receiver that enables fast channel tuning when a user selects the television channel.

According to the present invention, this object is achieved by a television signal receiver as set forth in claim 1 which comprises a channel selection means for selecting a television channel; a first tuner and a second tuner for receiving a television signal of a channel selected by the channel selection means; a switching means for switching between two signal paths of a video signal based on a television signal of the selected channel, one of which leads from the first tuner to a display means, the other of which leads from the second tuner to the display means; and a control means for controlling the first tuner, the second tuner, and the switching means.

When a user selects the television channel using the channel selection means, the control means controls not only the first tuner so as to try to receive a television signal of the channel selected by the channel selection means using DVB-T (Digital Video Broadcast-Terrestrial) receiving system, but also the second tuner so as to try to receive a television signal of the selected channel using DVB-T2 (Digital Video Broadcast-Terrestrial 2) receiving system, and the control means further controls the switching means so as to switch to the signal path leading to the display means from one of the first tuner and the second tuner which has been able to receive a television signal of the selected channel normally.

With the above configuration, w hen a user selects the television channel, both channel tuning by the first tuner using the DVB-T receiving system and channel tuning by the second tuner using the DVB-T2 receiving system are performed concurrently. And then, the television signal receiver outputs to the display means a video signal based on a television signal received by one of the first tuner and the second tuner which has been able to receive a television signal of the selected channel normally. In other words, if the first tuner has been able to receive the television signal using the DVB-T receiving system, the television signal receiver outputs to the display means a video signal based on the television signal received by the first tuner. On the contrary, if the second tuner has been able to receive the television signal using the DVB-T2 receiving system, the television signal receiver outputs to the display means a video signal based on the television signal received by the second tuner.

Accordingly, regardless of whether the television signal of the selected channel is broadcast using the DVB-T broadcasting system or the DVB-T2 broadcasting system, the television signal receiver can tune in to the selected channel fast using the receiving system corresponding to the broadcasting system so as to enable faster channel tuning than the above-described conventional television signal receiver when a user selects the television channel. This enables shortening waiting time for channel tuning so that video based on a television signal of the channel selected by the user is displayed quickly on the display means, thereby improving the usability of the television signal receiver.

Preferably, the television signal receiver further comprises: a memory for storing data representing a receiving system and a channel which are related to each other; and a determining means for determining whether or not the first tuner and the second tuner are free, when the user selects the television channel using the channel selection means.

When the determining means determines both the first tuner and the second tuner are free, the control means controls not only the first tuner so as to try to receive a television signal of the channel selected by the channel selection means using the DVB-T receiving system, but also the second tuner so as to try to receive a television signal of the selected channel using the DVB-T2 receiving system. Then the control means further controls the switching means so as to switch to the signal path leading to the display means from one of the first tuner and the second tuner which has been able to receive a television signal of the selected channel normally. And then the control means still further makes the memory store data representing not only the selected channel but also one of the DVB-T receiving system and the DVB-T2 receiving system as the receiving system which has been used by the one of the first tuner and the second tuner that has been able to receive the television signal so that the selected channel and the one of the DVB-T receiving system and the DVB-T2 receiving system as the receiving system are related to each other.

When the determining means determines one of the first tuner and the second tuner is free and the other is not free, and the memory stores data representing not only the channel selected by the channel selection means but also the one of the DVB-T receiving system and the DVB-T2 receiving system as the receiving system which is related to the selected channel, the control means controls the free tuner, which is one of the first tuner and the second tuner, so as to receive a television signal of the selected channel using the receiving system represented by data which are stored in the memory and related to the selected channel. And then, the control means further controls the switching means so as to switch to the signal path leading from the free tuner to the display means.

When the determining means determines one of the first tuner and the second tuner is free and the other is not free, and the memory does not store data representing the selected channel and the receiving system related to the selected channel, the control means controls the free tuner so as to try to receive a television signal of the selected channel using the DVB-T receiving system. And then, in the case where as a result of the trial, the free tuner has been able to receive the television signal, the control means further not only controls the switching means so as to switch to the signal path leading from the free tuner to the display means but also makes the memory store data representing the selected channel and the DVB-T receiving system as the receiving system so that the selected channel and the DVB-T receiving system are related to each other. On the contrary, in the case where as a result of the trial, the free tuner has not been able to receive the television signal of the selected channel using the DVB-T receiving system, the control means further controls the free tuner so as to receive a television signal of the selected channel using the DVB-T2 receiving system, and still further not only controls the switching means so as to switch to the signal path leading from the free tuner to the display means but also makes the memory store data representing the selected channel and the DVB-T2 receiving system as the receiving system so that the selected channel and the DVB-T2 receiving system are related to each other.

With this configuration, when one of the first tuner and the second tuner is free and the other is not free (when both channel tuning using the DVB-T receiving system and channel tuning using the DVB-T2 receiving system can not be performed concurrently), the free tuner is controlled to receive a television signal of the selected channel using the receiving system represented by data which are stored in the memory (using the receiving system which has been applied to receiving a television signal of the selected channel until then), except in the case where the memory does not store data representing the receiving system related to the selected channel.

In other words, in the case where one of the first tuner and the second tuner is free and the other is not free, the channel selected by the user is usually tuned in by the free tuner using the receiving system which has been applied to receiving a television signal of the selected channel until then. And then, video based on the television signal received by the above-described channel tuning is displayed on the display means. Accordingly, even when one of the first tuner and the second tuner is free and the other is not free, the television signal receiver can usually tune in to the selected channel fast using the receiving system corresponding to the broadcasting system so as to enable faster channel tuning than the above-described conventional television signal receiver when a user selects the television channel.

The television signal receiver may be designed so that the control means determines that the first tuner has been able to receive a television signal of the selected channel normally when the control means receives a channel lock signal from the first tuner, and the control means determines that the second tuner has been able to receive a television signal of the selected channel normally when the control means receives a channel lock signal from the second tuner.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a schematic block diagram of the TV (television) signal receiver according to an embodiment of the present invention; and
FIG. 2 is a flow chart showing tuning operation performed by the TV signal receiver 1.

### DESCRIPTION OF THE PREFERRED EMBODIMENTS

The best modes and preferred embodiments of the present invention will be described hereinafter with reference to the annexed drawings. Note that the specific embodiments described are not intended to cover the entire scope of the present invention, and hence the present invention is not limited to only the specific embodiments.

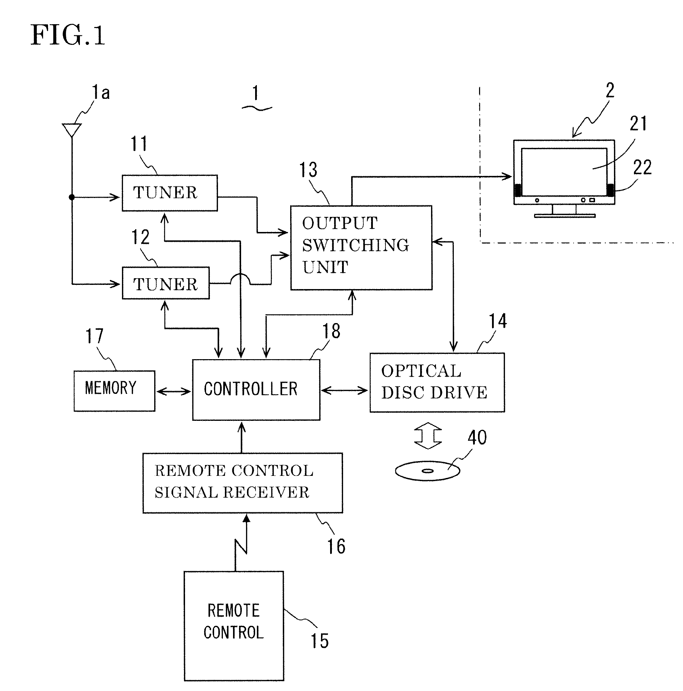

FIG. 1 is a schematic block diagram of the TV (television) signal receiver according to a preferred embodiment of the present invention. The TV signal receiver 1 is an apparatus for receiving TV signals broadcast from TV stations via radio waves. The TV signal receiver 1 is applicable to TV broadcasting of both DVB-T system and DVB-T2 system which are a kind of terrestrial digital TV broadcasting system. The TV signal receiver 1 is connected to an external device 2 (monitor: claimed display means) so as to output to the external device 2 a video signal and an audio signal based on a TV signal.

The TV signal receiver 1 comprises a first tuner 11, a second tuner 12, an output switching unit 13 (claimed switching means), an optical disc drive 14, a remote control 15, a remote control signal receiver 16, a memory 17, a controller 18 (claimed control means) for controlling each unit of the TV signal receiver 1, and so on. The controller 18 controls units such as the first tuner 11, the second tuner 12, and the output switching unit 13.

Each of the first tuner 11 and the second tuner 12 receives a TV signal of a channel selected by the remote control 15 via an antenna 1a. In addition, each of the first tuner 11 and the second tuner 12 demodulates and decodes a received TV signal into a video signal and an audio signal.

TV signals are broadcast on different channels (at different frequencies). A TV signal for each channel is broadcast using either the DVB-T system or the DVB-T2 system. The DVB-T system and the DVB-T2 system are different in a receiving system of TV signals (a system for demodulating and decoding TV signals into video signals and audio signals).

Each of the first tuner 11 and the second tuner 12 is applicable to not only DVB-T receiving system (a receiving system corresponding to TV broadcasting of the DVB-T system) but also DVB-T2 receiving system (a receiving system corresponding to TV broadcasting of the DVB-T2 system) as a receiving system.

A reception channel (a channel to be received: reception frequency) of each of the first tuner 11 and the second tuner 12 is selected under the control of the controller 18. Either the DVB-T receiving system or the DVB-T2 receiving system is selected as a receiving system of each of the first tuner 11 and the second tuner 12 under the control of the controller 18.

When a reception channel (reception frequency) is selected under the control of the controller 18, and either the DVB-T receiving system or the DVB-T2 receiving system is selected as a receiving system under the control of the controller 18, each of the first tuner 11 and the second tuner 12 receives a TV signal of the selected reception channel using the selected receiving system.

In other words, each of the first tuner 11 and the second tuner 12 receives a TV signal of the selected reception channel via an antenna 1 a under the control of the controller 18. And then each of the first tuner 11 and the second tuner 12 demodulates and decodes a received TV signal using the selected receiving system so as to generate a video signal and an audio signal based on the received TV signal. The video signals and the audio signals generated by the first tuner 11 and the second tuner 12 are supplied to the output switching unit 13.

Each of the first tuner 11 and the second tuner 12 has a function to detect whether or not it is demodulating and decoding a received TV signal of the selected channel normally. When demodulating and decoding a received TV signal normally, each of the first tuner 11 and the second tuner 12 outputs a channel lock signal indicating that it is demodulating and decoding a TV signal of the selected channel normally. The channel lock signal output from each of the first tuner 11 and the second tuner 12 is given to the controller 18.

Under the control of the controller 18, the output switching unit 13 switches between plural (at least two) signal supply paths of a video signal and an audio signal based on a TV signal of the selected channel. For example, at one time, the output switching unit 13 switches the signal supply paths so that a video signal and an audio signal generated by the first tuner 11 are supplied to the external device 2 but these signals generated by the second tuner 12 are not supplied to any devices. At another time, the output switching unit 13 switches the signal supply paths so that a video signal and an audio signal generated by the first tuner 11 are supplied to the optical disc drive 14 and these signals generated by the second tuner 12 are supplied to the external device 2.

The optical disc drive 14, on which optical discs 40 such as a DVD (Digital Versatile Disc) and a BD (Blu-ray Disc) are mounted and dismounted, records a video signal and an audio signal supplied via the output switching unit 13 onto the optical disc 40 under the control of the controller 18. The optical disc drive 14 reads a video signal and an audio signal from the optical disc 40 under the control of the controller 18. The video signal and the audio signal read from the optical disc 40 are supplied to the output switching unit 13.

The controller 18 controls the output switching unit 13 so that the video signal and the audio signal are supplied to the external device 2 via the output switching unit 13. Thus, the external device 2 outputs not only video based on the video signal but also audio based on the audio signal. More specifically, a display 21 of the external device 2 displays video based on the video signal, and a speaker 22 of the external device 2 outputs audio based on the audio signal.

The remote control 15 is operated by a user to instruct various operations of the TV signal receiver 1 such as turning on and off, selecting a TV channel and so on, thereby transmitting an operation signal showing the operation to the TV signal receiver 1.

A remote control signal receiver 16 receives the operation signal transmitted from the remote control 15 so as to output a signal showing the operation instructed by a user using the remote control 15 based on the received operation signal.

The memory 17 stores data representing a receiving system of a TV signal of each TV channel under the control of the controller 18.

The controller 18 determines the operation instructed using the remote control 15 based on the signal output from the remote control signal receiver 16 so as to control various operations of the TV signal receiver 1 in accordance with the result of the above-described determination. The controller 18 stores programs and various data for controlling operations of the TV signal receiver 1 so as to control various operations of the TV signal receiver 1 based on the programs and the data. The controller 18 controls operations such as tuning operation, recording operation and so on, as various operations of the TV signal receiver 1.

The tuning operation is the operation that tunes in to the TV channel selected by a user, and outputs video and audio based on a TV signal of the selected channel using the external device 2. The controller 18 performs the tuning operation when a user selects a TV channel with the remote control 15. The user's selection of a TV channel is done by user's operation of the remote control 15.

In the tuning operation, the controller 18 tunes the first tuner 11 and the second tuner 12 to a reception channel (reception frequency), and controls the first tuner 11, the second tuner 12, and the output switching unit 13 to output video and audio based on a TV signal received by either the first tuner 11 or the second tuner 12 using the external device 2. More specifically, the controller 18 selects not only a reception channel (reception frequency) but also a receiving system of each of the first tuner 11 and the second tuner 12 so as to tune the first tuner 11 and the second tuner 12 to the reception channel. In addition, the controller 18 controls the output switching unit 13 to switch the signal supply paths of a video signal and an audio signal so that a video signal and an audio signal generated by the first tuner 11 or the second tuner 12 are supplied to the external device 2, thereby controlling so that video and audio based on a TV signal received by either the first tuner 11 or the second tuner 12 are output using the external device 2.

The recording operation is the operation that records video and audio based on a TV signal received by either the first tuner 11 or the second tuner 12 onto the optical disc 40. The controller 18 performs the recording operation when a user instructs recording. The user's recording instruction is done by user's operation of the remote control 15.

In the recording operation, the controller 18 controls so that video and audio based on a TV signal received by either the first tuner 11 or the second tuner 12 are recorded onto the optical discs 40. More specifically, the controller 18 controls the output switching unit 13 to switch the signal supply paths of a video signal and an audio signal so that a video signal and an audio signal generated by either the first tuner 11 or the second tuner 12 are supplied to the optical disc drive 14. And then, the controller 18 instructs the optical disc drive 14 to record the video signal and the audio signal. Thus, the controller 18 controls so that video and audio based on a TV signal received by either the first tuner 11 or the second tuner 12 are recorded onto the optical discs 40.

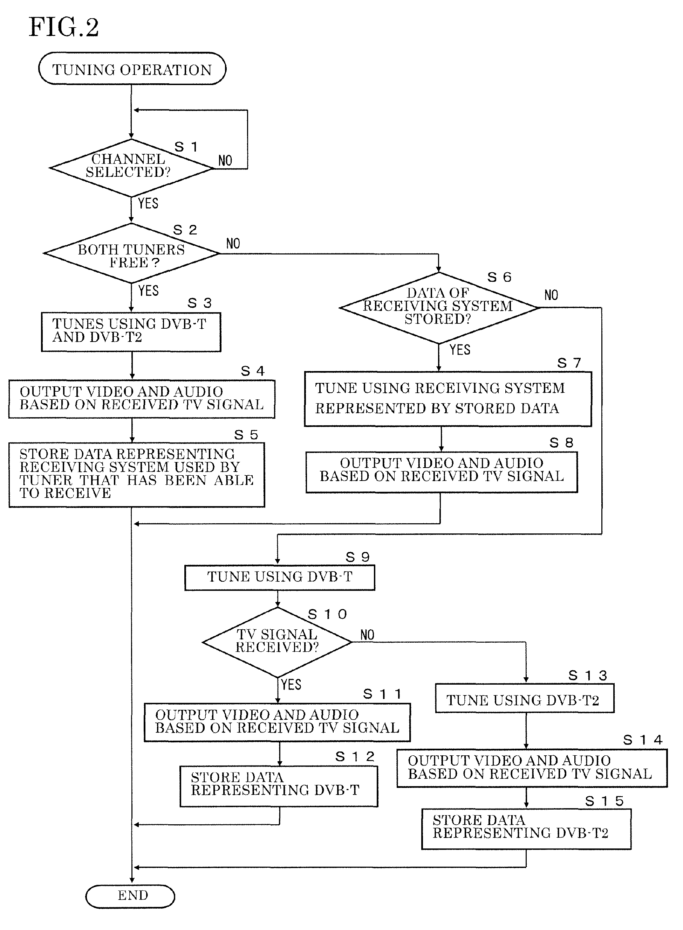

FIG. 2 is a flow chart showing the (channel) tuning operation performed by the TV signal receiver 1. When a user selects a TV channel using the remote control 15 (YES in S1), the controller 18 determines whether or not both the first tuner 11 and the second tuner 12 are free (available) (S2). When neither the first tuner 11 nor the second tuner 12 is used to record video and audio based on a TV signal onto the optical disc 40, the controller 18 determines that both the first tuner 11 and the second tuner 12 are free (available). On the other hand, when one of the first tuner 11 and the second tuner 12 is used to record video and audio based on a TV signal onto the optical disc 40, the controller 18 does not determine that both the first tuner 11 and the second tuner 12 are free (determines that one of the first tuner 11 and the second tuner 12 is free and the other is not free).

When determining that both the first tuner 11 and the second tuner 12 are free (YES in S2), the controller 18 tunes the first tuner 11 and the second tuner 12 to the channel selected by a user using the DVB-T receiving system and the DVB-T2 receiving system (S3).

In other words, in the case where both the first tuner 11 and the second tuner 12 are free when a user selects a TV channel, the controller 18 tunes the first tuner 11 and the second tuner 12 to the reception channel so that the first tuner 11 and the second tuner 12 receive a TV signal of the channel selected by a user using the DVB-T receiving system and the DVB-T2 receiving system. More specifically, the controller 18 tunes the first tuner 11 to the reception channel so that the first tuner 11 receives (tries to receive) a TV signal of the channel selected by a user using the DVB-T receiving system. In parallel with this tuning of the first tuner 11, the controller 18 tunes the second tuner 12 to the reception channel so that the second tuner 12 receives (tries to receive) a TV signal of the channel selected by a user using the DVB-T2 receiving system.

And then, the controller 18 controls so that outputs video and audio based on a TV signal received by one of the first tuner 11 and the second tuner 12 which has been able to receive a TV signal of the selected channel normally using the external device 2 (S4). Specifically, when determining that the first tuner 11 has been able to receive a TV signal of the selected channel normally (using the DVB-T receiving system), the controller 18 controls so that outputs video and audio based on a TV signal received by the first tuner 11 using the external device 2. More specifically, when determining that the first tuner 11 has been able to receive a TV signal of the selected channel normally, the controller 18 controls the output switching unit 13 so as to switch to the signal path leading from the first tuner 11 to the external device 2.

On the contrary, when determining that the second tuner 12 has been able to receive a TV signal of the selected channel normally (using the DVB-T2 receiving system), the controller 18 controls so that outputs video and audio based on a TV signal received by the second tuner 12 using the external device 2. More specifically, when determining that the second tuner 12 has been able to receive a TV signal of the selected channel normally, the controller 18 controls the output switching unit 13 so as to switch to the signal path leading from the second tuner 12 to the external device 2. Note that when the controller 18 receives a channel lock signal from the first tuner 11, the controller 18 determines that the first tuner 11 has been able to receive a TV signal of the selected channel normally. On the other hand, when the controller 18 receives a channel lock signal from the second tuner 12, the controller 18 determines that the second tuner 12 has been able to receive a TV signal of the selected channel normally.

Additionally, the controller 18 makes the memory 17 store data representing not only the selected channel but also one of the DVB-T receiving system and the DVB-T2 receiving system as the receiving system which has been used by the one of the first tuner 11 and the second tuner 12 that has been able to receive a TV signal so that the selected channel and the one of the DVB-T receiving system and the DVB-T2 receiving system are related to each other (S5).

Specifically, when determining that the first tuner 11 has been able to receive a TV signal of the selected channel normally using the DVB-T receiving system, the controller 18 makes the memory 17 store data representing not only the selected channel but also data representing the DVB-T receiving system (data showing that the used receiving system is the DVB-T receiving system) so that the selected channel and the DVB-T receiving system are related to each other. On the other hand, when determining that the second tuner 12 has been able to receive a TV signal of the selected channel normally using the DVB-T2 receiving system, the controller 18 makes the memory 17 store data representing not only the selected channel but also data representing the DVB-T2 receiving system (data showing that the used receiving system is the DVB-T2 receiving system) so that the selected channel and the DVB-T2 receiving system are related to each other. Thus, data representing the receiving system corresponding to the broadcasting system of the selected channel at that time is stored in the memory 17.

On the contrary, in the above-described S2, when the controller 18 determines that one of the first tuner 11 and the second tuner 12 is free and the other is not free (NO in S2), and the memory 17 stores data representing not only the channel selected by a user but also the receiving system of the selected channel (YES in S6), the controller 18 controls the free tuner, which is one of the first tuner 11 and the second tuner 12, so as to receive a TV signal of the selected channel using the receiving system represented by data which are stored in the memory 17 and related to the selected channel (S7). This receiving system represented by the data stored in the memory 17 is the receiving system which has been applied to receiving a TV signal of the selected channel until then. The above-described free tuner is the tuner which is not used for recording video and audio based on a TV signal onto the optical discs 40.

In other words, when a user selects a TV channel, in the case where one of the first tuner 11 and the second tuner 12 is free and the other is not free, and the memory 17 stores data representing not only the channel selected by a user but also the receiving system of the selected channel, the controller 18 tunes the free tuner to the reception channel so that the free tuner receives a TV signal of the channel selected by a user using the receiving system represented by data which are stored in the memory 17 and related to the selected channel.

And then, the controller 18 controls so that outputs video and audio based on a TV signal received by the free tuner (received in the above-described S7) using the external device 2 (S8). Specifically, the controller 18 controls the output switching unit 13 so as to switch to the signal path leading from the free tuner to the external device 2.

On the contrary, in the above-described S6, in the case where the memory 17 does not store data representing the channel selected by a user and the receiving system of the selected channel (NO in S6), the controller 18 controls the free tuner so as to try to receive a TV signal of the selected channel using the DVB-T receiving system. Specifically, the controller 18 tunes the free tuner to the reception channel using the DVB-T receiving system (S9) so that the free tuner receives a TV signal of the channel selected by a user.

In other words, when a user selects a TV channel, in the case where one of the first tuner 11 and the second tuner 12 is free and the other is not free, and the memory 17 does not store data representing the channel selected by a user and the receiving system of the selected channel, the controller 18 tunes the free tuner to the reception channel so that the free tuner receives a TV signal of the channel selected by a user using the DVB-T receiving system.

In the case where as a result of the above-described trial, the free tuner has been able to receive the TV signal (by tuning with the DVB-T receiving system in the above-described S9) (YES in S10), the controller 18 controls so that outputs video and audio based on a TV signal received by the free tuner (received in the above-described S9) using the external device 2 (S11). Specifically, the controller 18 controls the output switching unit 13 so as to switch to the signal path leading from the free tuner to the external device 2. Note that when receiving a channel lock signal from the free tuner, the controller 18 determines that the free tuner has been able to receive a TV signal of the selected channel normally.

Additionally, the controller 18 makes the memory 17 store data representing the selected channel and the DVB-T receiving system as the receiving system so that the selected channel and the DVB-T receiving system are related to each other (S12). Specifically, the controller 18 makes the memory 17 store not only data representing the selected channel but also data showing that the used receiving system is the DVB-T receiving system so that these data are related to each other. Thus, data representing the receiving system corresponding to the broadcasting system of the selected channel at that time is stored in the memory 17.

On the other hand, in the above-described S 10, in the case where the free tuner has not been able to receive the TV signal (by tuning with the DVB-T receiving system in the above-described S9) (NO in S10), the controller 18 controls the free tuner so as to receive a TV signal of the channel selected by a user using the DVB-T2 receiving system (S 13).

In other words, in the case where the free tuner has not been able to receive the TV signal by tuning with the DVB-T receiving system in the above-described S9, the controller 18 tunes the free tuner to the reception channel so that the free tuner receives a TV signal of the channel selected by a user using the DVB-T2 receiving system.

And then, the controller 18 controls so that outputs video and audio based on a TV signal received by tuning in the above-described S13 (received by the free tuner) using the external device 2 (S 14). Specifically, the controller 18 controls the output switching unit 13 so as to switch to the signal path leading from the free tuner to the external device 2.

Additionally, the controller 18 makes the memory 17 store data representing the selected channel and the DVB-T2 receiving system as the receiving system so that the selected channel and the DVB-T2 receiving system are related to each other (S15). Specifically, the controller 18 makes the memory 17 store not only data representing the selected channel but also data showing that the used receiving system is the DVB-T2 receiving system so that these data are related to each other. Thus, data representing the receiving system corresponding to the broadcasting system of the selected channel at that time is stored in the memory 17. In this way, the (channel) tuning operation is performed.

According to the TV signal receiver 1 of the present invention, in the case where both the first tuner 11 and the second tuner 12 are free when a user selects a TV channel, the controller 18 tunes the first tuner 11 and the second tuner 12 to the channel selected by a user using the DVB-T receiving system and the DVB-T2 receiving system concurrently. Specifically, the controller 18 tunes the first tuner 11 to the reception channel so that the first tuner 11 receives (tries to receive) a TV signal of the channel selected by a user using the DVB-T receiving system. In parallel with this tuning of the first tuner 11, the controller 18 tunes the second tuner 12 to the reception channel so that the second tuner 12 receives (tries to receive) a TV signal of the channel selected by a user using the DVB-T2 receiving system.

And then, the controller 18 controls so that outputs video and audio based on a TV signal received by the tuner (one of the first tuner 11 and the second tuner 12), which has been able to receive a TV signal of the selected channel normally, using the external device 2. Specifically, when determining that the first tuner 11 has been able to receive a TV signal of the selected channel normally (using the DVB-T receiving system), the controller 18 controls so that outputs video and audio based on a TV signal received by the first tuner 11. On the contrary, when determining that the second tuner 12 has been able to receive a TV signal of the selected channel normally (using the DVB-T2 receiving system), the controller 18 controls so that outputs video and audio based on a TV signal received by the second tuner 12.

Accordingly, in the case where both the first tuner 11 and the second tuner 12 are free, the controller 18 tunes the first tuner 11 and the second tuner 12 to the channel selected by a user using the DVB-T receiving system and the DVB-T2 receiving system concurrently. Thus, regardless of whether the TV signal of the selected channel is broadcast using the DVB-T broadcasting system or the DVB-T2 broadcasting system, the TV signal receiver 1 can tune in to the selected channel fast using the receiving system corresponding to the broadcasting system of the selected channel.

In the other hand, in the case where one of the first tuner 11 and the second tuner 12 is free and the other is not free (when both channel tuning using the DVB-T receiving system and channel tuning using the DVB-T2 receiving system can not be performed concurrently), the free tuner is controlled to receive a TV signal of the selected channel using the receiving system represented by data which are stored in the memory 17 (using the receiving system which has been applied to receiving a TV signal of the selected channel until then), except in the case where the memory 17 does not store data representing the receiving system related to the selected channel. And then, video and audio based on a TV signal received by this tuning are output.

Accordingly, when one of the first tuner 11 and the second tuner 12 is free and the other is not free, the channel selected by the user is usually tuned in to using the receiving system which has been applied to receiving a TV signal of the selected channel until then. Thus, the TV signal receiver 1 can tune in to the selected channel fast using the receiving system corresponding to the broadcasting system of the selected channel.

As described in the foregoing, the TV signal receiver 1 of the present invention can tune in to the selected channel fast using the receiving system corresponding to the broadcasting system so as to enable faster channel tuning than the above-described conventional TV signal receiver when a user selects the television channel. This enables shortening waiting time for channel tuning so that video and audio based on a television signal of the channel selected by the user are output quickly, thereby improving the usability of the TV signal receiver 1.

It is to be noted that the present invention is not limited to the above embodiments, and various modifications are possible. For example, once one of the first tuner 11 and the second tuner 12 has been able to receive a TV signal of the channel selected by a user using the DVB-T2 receiving system in the tuning operation, from the next tuning operation, even when both the first tuner 11 and the second tuner 12 are free, the controller 18 may not tune both the first tuner 11 and the second tuner 12 to the reception channel using the DVB-T receiving system and the DVB-T2 receiving system concurrently, but may tune only one of the first tuner 11 and the second tuner 12 to the reception channel using the DVB-T2 receiving system.

Moreover, the TV signal receiver is not limited to one which is connected to an external device having a display and a speaker, but may be one which has a display and a speaker integrally formed with the body.

## Claims

1. A television signal receiver (1) comprising:
a channel selection means (15) for selecting a television channel;
a first tuner (11) and a second tuner (12) for receiving a television signal of a channel selected by the channel selection means (15);
a switching means (13) for switching between two signal paths of a video signal based on a television signal of the selected channel, one of which leads from the first tuner (11) to a display means (2), the other of which leads from the second tuner (12) to the display means (2); and
a control means (18) for controlling the first tuner (11), the second tuner (12), and the switching means (13),
**characterized in that** when a user selects the television channel using the channel selection means (15), the control means (18) controls not only the first tuner (11) so as to try to receive a television signal of the channel selected by the channel selection means (15) using DVB-T (Digital Video Broadcast-Terrestrial) receiving system, but also the second tuner (12) so as to try to receive a television signal of the selected channel using DVB-T2 (Digital Video Broadcast-Terrestrial 2) receiving system, and the control means (18) further controls the switching means (13) so as to switch to the signal path leading to the display means (2) from one of the first tuner (11) and the second tuner (12) which has been able to receive a television signal of the selected channel normally.

2. The television signal receiver (1) according to claim 1, **characterized in that** the television signal receiver (1) further comprises: a memory (17) for storing data representing a receiving system and a channel which are related to each other; and a determining means (18) for determining whether or not the first tuner (11) and the second tuner (12) are free when the user selects the television channel using the channel selection means (15),
wherein when the determining means (18) determines that both the first tuner (11) and the second tuner (12) are free, the control means (18) controls not only the first tuner (11) so as to try to receive a television signal of the channel selected by the channel selection means (15) using the DVB-T receiving system, but also the second tuner (12) so as to try to receive a television signal of the selected channel using the DVB-T2 receiving system, and the control means (18) further controls the switching means (13) so as to switch to the signal path leading to the display means (2) from one of the first tuner (11) and the second tuner (12) which has been able to receive a television signal of the selected channel normally, and still further makes the memory (17) store data representing not only the selected channel but also one of the DVB-T receiving system and the DVB-T2 receiving system as the receiving system which has been used by the one of the first tuner (11) and the second tuner (12) that has been able to receive the television signal so that the selected channel and the one of the DVB-T receiving system and the DVB-T2 receiving system as the receiving system are related to each other,
wherein when the determining means (18) determines that one of the first tuner (11) and the second tuner (12) is free and the other is not free, and the memory (17) stores data representing not only the channel selected by the channel selection means (15) but also the one of the DVB-T receiving system and the DVB-T2 receiving system as the receiving system which is related to the selected channel, the control means (18) controls the free tuner, which is one of the first tuner (11) and the second tuner (12), so as to receive a television signal of the selected channel using the receiving system represented by data which are stored in the memory (17) and related to the selected channel, and the control means (18) further controls the switching means (13) so as to switch to the signal path leading from the free tuner to the display means (2),
wherein when the determining means (18) determines that one of the first tuner (11) and the second tuner (12) is free and the other is not free, and the memory (17) does not store data representing the selected channel and the receiving system related to the selected channel, the control means (18) controls the free tuner so as to try to receive a television signal of the selected channel using the DVB-T receiving system, and then in the case where as a result of the trial, the free tuner has been able to receive the television signal, the control means (18) further not only controls the switching means (13) so as to switch to the signal path leading from the free tuner to the display means (2) but also makes the memory (17) store data representing the selected channel and the DVB-T receiving system as the receiving system so that the selected channel and the DVB-T receiving system are related to each other, on the contrary, in the case where as a result of the trial, the free tuner has not been able to receive the television signal of the selected channel using the DVB-T receiving system, the control means (18) further controls the free tuner so as to receive a television signal of the selected channel using the DVB-T2 receiving system, and still further not only controls the switching means (13) so as to switch to the signal path leading from the free tuner to the display means (2) but also makes the memory (17) store data representing the selected channel and the DVB-T2 receiving system as the receiving system so that the selected channel and the DVB-T2 receiving system are related to each other.

3. The television signal receiver (1) according to claim 1, or 2, wherein when the control means (18) receives a channel lock signal from the first tuner (11), the control means (18) determines that the first tuner (11) has been able to receive a television signal of the selected channel normally,
wherein when the control means (18) receives a channel lock signal from the second tuner (12), the control means (18) determines that the second tuner (12) has been able to receive a television signal of the selected channel normally.
